(19) Europäisches Patentamt
European Patent Office
Office européen des brevets

(11) EP 4 040 590 A1

(12) EUROPEAN PATENT APPLICATION
published in accordance with Art. 153(4) EPC

(43) Date of publication:
**10.08.2022 Bulletin 2022/32**

(21) Application number: **20885772.2**

(22) Date of filing: **06.11.2020**

(51) International Patent Classification (IPC):
***H01M 50/409*** *(2021.01)* ***H01M 50/40*** *(2021.01)*
***H01M 10/052*** *(2010.01)* ***H01M 4/525*** *(2010.01)*
***B29C 48/00*** *(2019.01)* ***B29C 48/08*** *(2019.01)*
***C08J 9/28*** *(2006.01)* ***C08J 9/26*** *(2006.01)*

(52) Cooperative Patent Classification (CPC):
**B29C 48/00; B29C 48/08; C08J 9/26; C08J 9/28; H01M 4/525; H01M 10/052; H01M 50/40; H01M 50/409;** Y02E 60/10

(86) International application number:
**PCT/KR2020/015550**

(87) International publication number:
**WO 2021/091326 (14.05.2021 Gazette 2021/19)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **08.11.2019 KR 20190142908**

(71) Applicant: **Lg Chem, Ltd.**
**Seoul 07336 (KR)**

(72) Inventors:
- **LEE, Joo-Sung**
  **Daejeon 34122 (KR)**
- **BAE, Won-Sik**
  **Daejeon 34122 (KR)**
- **RYU, Bi-Oh**
  **Daejeon 34122 (KR)**
- **HAN, Sung-Jae**
  **Daejeon 34122 (KR)**

(74) Representative: **Hoffmann Eitle**
**Patent- und Rechtsanwälte PartmbB**
**Arabellastraße 30**
**81925 München (DE)**

# (54) CROSSLINKED POLYOLEFIN SEPARATOR, METHOD FOR MANUFACTURING CROSSLINKED POLYOLEFIN SEPARATOR, AND ELECTROCHEMICAL DEVICE COMPRISING SAME

(57) Disclosed is a crosslinked polyolefin separator, which shows a ratio (A/B) of storage modulus G' (A) to loss modulus G" (B) of 2 or more, at a range of the frequency of the crosslinked polyolefin separator of 1 rad/s or less, in the frequency-loss/storage modulus curve. The crosslinked polyolefin separator is controlled to have a high ratio of storage modulus to loss modulus, and thus maintains its elasticity even at high temperature. Therefore, it is possible to provide a separator having improved safety.

FIG. 1

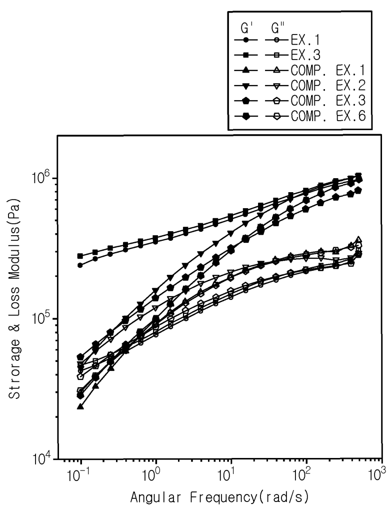


EP 4 040 590 A1

## Description

### TECHNICAL FIELD

The present disclosure relates to a crosslinked polyolefin separator, a method for manufacturing the crosslinked polyolefin separator and an electrochemical device including the same.

The present application claims priority to Korean Patent Application No. 10-2019-0142908 filed on November 8, 2019 in the Republic of Korea, the disclosures of which are incorporated herein by reference.

### BACKGROUND ART

Recently, energy storage technology has been given an increasing attention. Efforts into research and development for electrochemical devices have been actualized more and more, as the application of energy storage technology has been extended to energy for cellular phones, camcorders and notebook PC and even to energy for electric vehicles. In this context, electrochemical devices have been most spotlighted. Among such electrochemical devices, development of rechargeable secondary batteries has been focused. More recently, active studies have been conducted about designing a novel electrode and battery in order to improve the capacity density and specific energy in developing such batteries.

Among the commercially available secondary batteries, lithium secondary batteries developed in the early 1990's have been spotlighted, since they have a higher operating voltage and significantly higher energy density as compared to conventional batteries, such as Ni-MH, Ni-Cd and sulfuric acid-lead batteries using an aqueous electrolyte.

Such a lithium secondary battery includes a positive electrode, a negative electrode, an electrolyte and a separator. Particularly, it is required for the separator to have insulation property for separating and electrically insulating the positive electrode and the negative electrode from each other and high ion conductivity for increasing lithium ion permeability based on high porosity.

The separator has viscoelasticity, and thus has a problem in that it hardly ensures safety due to its increased viscosity, when being exposed to high temperature.

Particularly, the above-mentioned problem becomes serious, when the positive electrode active material contained in a positive electrode is a nickel-rich positive electrode active material.

### DISCLOSURE

#### Technical Problem

The present disclosure is designed to solve the problems of the related art, and therefore the present disclosure is directed to providing a separator which maintains elasticity even at high temperature and an electrochemical device including the same.

Particularly, the present disclosure is directed to providing a separator which maintains elasticity at a temperature ranging from 180°C to 220°C and retains its function of separating a positive electrode and a negative electrode from each other in a lithium secondary battery, and thus ensures safety, and an electrochemical device including the same.

The present disclosure is also directed to providing a separator which maintains strength at high temperature to ensure resistance against external force in a high-temperature exposure condition, and thus ensures the safety of an electrochemical device.

#### Technical Solution

In one aspect of the present disclosure, there is provided a crosslinked polyolefin separator according to any one of the following embodiments.

According to the first embodiment, there is provided a crosslinked polyolefin separator which shows a ratio (A/B) of storage modulus G' (A) to loss modulus G" (B) of 2 or more, at a range of the frequency of the crosslinked polyolefin separator of 1 rad/s or less, in a frequency-loss/storage modulus curve, the horizontal axis of which is the frequency (rad/s) of the crosslinked polyolefin separator converted into a log scale and the vertical axis of which is storage modulus G' (A) and loss modulus G" (B) of the crosslinked polyolefin separator converted into a log scale.

According to the second embodiment, there is provided a crosslinked polyolefin separator which shows a gradient of a curve of storage modulus G' vs. frequency of 0.05-0.4, at a range of the frequency of the crosslinked polyolefin separator of $10^{-1}$ to 1 rad/s, in a frequency-loss modulus curve, the horizontal axis of which is the frequency (rad/s) of the crosslinked polyolefin separator converted into a log scale and the vertical axis of which is storage modulus G' (A) and loss modulus G" (B) of the crosslinked polyolefin separator converted into a log scale.

According to the third embodiment, there is provided the crosslinked polyolefin separator as defined in the first or the second embodiment, wherein the storage modulus is $1.0\times10^5$ to $1.0\times10^7$ Pa.
According to the fourth embodiment, there is provided the crosslinked polyolefin separator as defined in any one of the first to the third embodiments, wherein the loss modulus is $3.0\times10^5$ Pa or less.
According to the fifth embodiment, there is provided the crosslinked polyolefin separator as defined in any one of the first to the fourth embodiments, which is formed by aqueous crosslinking or UV crosslinking.
According to the sixth embodiment, there is provided the crosslinked polyolefin separator as defined in the fifth embodiment, which is formed by aqueous crosslinking, includes a Si-O-Si bond therein, and has a silicon (Si) content of 0.01-20 parts by weight based on 100 parts by weight of the crosslinked polyolefin separator.
According to the seventh embodiment, there is provided the crosslinked polyolefin separator as defined in the fifth embodiment, which is formed by UV crosslinking, and includes a plurality of fibrils and pores formed by the fibrils entangled with one another, wherein polyolefin chains forming the fibrils are crosslinked directly with one another.
In another aspect of the present disclosure, there is provided a lithium secondary battery according to the following embodiment.
According to the eighth embodiment, there is provided a lithium secondary battery including a positive electrode, a negative electrode and a separator interposed between the positive electrode and the negative electrode, wherein the separator is the crosslinked polyolefin separator as defined in any one of the first to the seventh embodiments, and the positive electrode includes a current collector; and a layer of positive electrode active material disposed on the current collector, wherein the positive electrode active material includes $Li[Ni_aCo_bMn_cM1_dM2_e]O_2$ (wherein each of M1 and M2 independently any one selected from the group consisting of Al, Ni, Co, Fe, Mn, V, Cr, Ti, W, Ta, Mg and Mo, each of a, b, c, d and e independently represents the atomic fraction of each element forming the oxide, $a \geq 0.5$, $a + b + c + d + e = 1$, and $b > d > e$).
In still another aspect of the present disclosure, there is provided a method for manufacturing a crosslinked polyolefin separator according to any one of the following embodiments.
According to the ninth embodiment, there is provided a method for manufacturing a crosslinked polyolefin separator, including the steps of:

(S1) introducing polyolefin, a diluting agent, an initiator, a crosslinking catalyst and alkoxysilane containing a carbon-carbon double bonded group to an extruder, followed by mixing, to carry out reactive extrusion of a silane-grafted polyolefin composition;
(S2) molding and orienting the reactive extruded silane-grafted polyolefin composition in the form of a sheet;
(S3) extracting the diluting agent from the oriented sheet to obtain a porous membrane;
(S4) thermally fixing the porous membrane, while the porous membrane is oriented at 100-150% based on the width of the porous membrane initially introduced to a thermal fixing bath; and
(S5) carrying out aqueous crosslinking of the thermally fixed porous membrane,
wherein the crosslinked polyolefin separator shows a ratio (A/B) of storage modulus G' (A) to loss modulus G" (B) of 2 or more, at a range of the frequency of the crosslinked polyolefin separator of 1 rad/s or less, in a frequency-loss/storage modulus curve, the horizontal axis of which is the frequency (rad/s) of the crosslinked polyolefin separator converted into a log scale and the vertical axis of which is storage modulus G' (A) and loss modulus G" (B) of the crosslinked polyolefin separator converted into a log scale.

According to the tenth embodiment, there is provided the method for manufacturing a crosslinked polyolefin separator as defined in the ninth embodiment, wherein step (S4) is a step of thermally fixing the porous membrane, wherein the porous membrane is subjected to the first orientation at 100-180% based on the width of the porous membrane initially introduced to a thermal fixing bath, and then is subjected to the second orientation at a reduced orientation ratio of 100-150% based on the width of the porous membrane initially introduced to a thermal fixing bath.
According to the eleventh embodiment, there is provided the method for manufacturing a crosslinked polyolefin separator as defined in the tenth embodiment, wherein the ratio (t2/t1) of the time (t1) at which point the first orientation is started after initially introducing the porous membrane to a thermal fixing bath based on the time (t2) at which point the second orientation is started after initially introducing the porous membrane to a thermal fixing bath is 0.5-1.5.
According to the twelfth embodiment, there is provided the method for manufacturing a crosslinked polyolefin separator as defined in any one of the ninth to the eleventh embodiments, wherein the thermal fixing temperature is 100-140°C, and the thermal fixing time is 10-120 seconds.
In yet another embodiment of the present disclosure, there is provided a method for manufacturing a crosslinked polyolefin separator according to any one of the following embodiments.
According to the thirteenth embodiment, there is provided a method for manufacturing a crosslinked polyolefin separator which includes a crosslinked polyolefin porous substrate including a plurality of fibrils and pores formed by the fibrils entangled with one another, wherein polyolefin chains forming the fibrils are crosslinked directly with one

another, the method including the steps of:

applying a Type 2 photoinitiator composition including a Type 2 photoinitiator to a non-crosslinked polyolefin porous substrate; and
irradiating UV rays to the polyolefin porous substrate coated with the Type 2 photoinitiator composition, wherein the UV rays are irradiated at an irradiation light dose of 10-2500 mJ/$cm^2$, and
the crosslinked polyolefin separator shows a ratio (A/B) of storage modulus G' (A) to loss modulus G" (B) of 2 or more, at a range of the frequency of the crosslinked polyolefin separator of 1 rad/s or less, in a frequency-loss/storage modulus curve, the horizontal axis of which is the frequency (rad/s) of the crosslinked polyolefin separator converted into a log scale and the vertical axis of which is storage modulus G' (A) and loss modulus G" (B) of the crosslinked polyolefin separator converted into a log scale.

According to the fourteenth embodiment, there is provided the method for manufacturing a crosslinked polyolefin separator as defined in the thirteenth embodiment, wherein the Type 2 photoinitiator includes thioxanthone (TX), a thioxanthone derivative, benzophenone (BPO), a benzophenone derivative, or a mixture of two or more of them.
According to the fifteenth embodiment, there is provided the method for manufacturing a crosslinked polyolefin separator as defined in the thirteenth or the fourteenth embodiment, wherein the concentration of the Type 2 photoinitiator in the Type 2 photoinitiator composition is 0.01-0.3 wt%.

## Advantageous Effects

According to an embodiment of the present disclosure, it is possible to provide a separator having improved mechanical or thermal safety depending on silane crosslinking in the separator.
According to an embodiment of the present disclosure, it is possible to provide a separator having improve mechanical or thermal safety by using an ultrahigh-molecular weight polyolefin.
According to an embodiment of the present disclosure, it is possible to provide a lithium secondary battery having improved safety by using the separator according to an embodiment of the present disclosure, particularly with respect to a lithium secondary battery provided with a positive electrode including a nickel-rich positive electrode active material having relatively low safety due to its low self-heating temperature.
According to an embodiment of the present disclosure, it is possible to provide a separator having low viscosity and high elasticity at high temperature. Therefore, the separator maintains its strength at high temperature and sufficiently ensures resistance against external force in a high-temperature exposure condition, and thus can provide an electrochemical device having improved safety.
According to an embodiment of the present disclosure, it is possible to obtain a crosslinked polyolefin separator through a simplified method as compared to the conventional methods.

## DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a graph illustrating the loss/storage modulus of each of the separators according to Examples and Comparative Examples.

## BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.
As used herein, the expression 'one portion is connected to another portion' covers not only 'a portion is directly connected to another portion' but also 'one portion is connected electrically to another portion' by way of the other element interposed between them.
Throughout the specification, the expression 'a part includes an element' does not preclude the presence of any additional elements but means that the part may further include the other elements.
In addition, it will be understood that the terms 'comprises' and/or 'comprising', or 'includes' and/or 'including' when used in this specification, refer to the presence of any stated shapes, numbers, steps, operations, members,

elements and/or groups thereof, but do not preclude the addition of one or more other shapes, numbers, steps, operations, members, elements and/or groups thereof.

As used herein, the terms 'approximately', 'substantially', or the like, are used as meaning contiguous from or to the stated numerical value, when an acceptable preparation and material error unique to the stated meaning is suggested, and are used for the purpose of preventing an unconscientious invader from unduly using the stated disclosure including an accurate or absolute numerical value provided to help understanding of the present disclosure.

As used herein, the expression 'A and/or B' means 'A, B or both of them'.

In one aspect, there is provided a crosslinked polyolefin separator and an electrochemical device including the same.

A separator used for a lithium secondary battery shows excellent safety, when the interval between its shutdown temperature and meltdown temperature is large. To broaden the interval between the shutdown temperature and meltdown temperature, it is required that the shutdown temperature is controlled to be decreased and the meltdown temperature is controlled to be increased.

Therefore, according to the present disclosure, crosslinking is used in order to obtain a separator having a higher meltdown temperature. Herein, the crosslinking may be aqueous crosslinking or UV crosslinking. As another method for increasing the meltdown temperature, there is a method for increasing the molecular weight of polyolefin to improve elasticity. When using a polyolefin resin having a large molecular weight, flowability is lowered at high temperature as well as low temperature to cause an increase in elasticity. Herein, the polyolefin resin having a large molecular weight may be an ultrahigh-molecular weight polyolefin.

Meanwhile, such a crosslinked separator has viscoelasticity, and has a problem in that the viscosity of the viscoelastic properties is increased, when the separator is exposed to high temperature, thereby making it difficult to ensure safety.

The present inventors have focused on the above-mentioned problems, and have conducted many studies to provide a separator which ensures safety even at high temperature, and an electrochemical device including the same.

Meanwhile, as used herein, 'high temperature' means a temperature of 180-220°C and may refer to a temperature, where the separator is molten, or higher.

The crosslinked polyolefin separator according to an embodiment of the present disclosure shows a ratio (A/B) of storage modulus G' (A) to loss modulus G" (B) of 2 or more, at a range of the frequency of the crosslinked polyolefin separator of 1 rad/s or less, in a frequency-loss/storage modulus curve, the horizontal axis of which is the frequency (rad/s) of the crosslinked polyolefin separator converted into a log scale and the vertical axis of which is storage modulus G' (A) and loss modulus G" (B) of the crosslinked polyolefin separator converted into a log scale.

The present inventors have conducted intensive studies to provide a crosslinked polyolefin separator which ensures safety even at high temperature. As a means for solving the technical problem, it is intended to reduce the viscosity of the separator and to increase the elasticity thereof at high temperature so that the separator may have improved high-temperature safety.

Particularly, when the viscosity of the separator is reduced and the elasticity thereof in increased at high temperature, the separator maintains its strength at high temperature and the separator itself shows no flowability, and thus a short-circuit between a positive electrode and a negative electrode can be prevented, resulting in improvement of the safety of the separator.

According to an embodiment of the present disclosure, it is possible to provide a separator having improved safety, when G' is larger than G", particularly when G'/G" is 2 or more, in a frequency-loss/storage modulus curve, the horizontal axis of which is the frequency (rad/s) of the crosslinked polyolefin separator converted into a log scale and the vertical axis of which is storage modulus G' (A) and loss modulus G" (B) of the crosslinked polyolefin separator converted into a log scale.

When G" is larger than G', the separator shows higher viscosity as compared to elasticity, and thus there is a problem in that the pores of the separator may be blocked rapidly at high temperature.

Meanwhile, when G'/G" is less than 2, there is a problem in that the separator shows flowability and loses its function as an insulator undesirably.

As used herein, storage modulus G' means the ability of an energy-storing material and may be represented by the following Formula 1:

[Formula 1]

$$G' = (\text{stress}/\text{strain})\cos\delta$$

Herein, the storage modulus may be determined by dynamic mechanical analysis.

According to the present disclosure, the storage modulus is determined by using dynamic mechanical analysis

through a temperature sweep test at a temperature ranging from 180°C to 220°C and at a frequency of 1 rad/s.

According to an embodiment of the present disclosure, the storage modulus may be $1.0\times10^5$ to $1.0\times10^7$ Pa, $1.2\times10^5$ to $5.0\times10^6$ Pa, $1.5\times10^5$ to $2.0\times10^6$ Pa, $1.7\times10^5$ to $1.0\times10^6$ Pa, or $1.9\times10^5$ to $3.8\times10^5$ Pa at a temperature of 190°C and at a frequency of 1 rad/s. When the storage modulus is within the above-defined range, there is an advantage in that the separator maintains its strength at high temperature.

As used herein, loss modulus G" means the ability of a material which loses energy upon deformation and may be represented by the following Formula 2:

[Formula 2]

$$G'' = (\text{stress}/\text{strain})\sin\delta$$

Herein, the loss modulus may be determined by dynamic mechanical analysis.

According to the present disclosure, the loss modulus is determined by using dynamic mechanical analysis through a temperature sweep test at a temperature ranging from 180°C to 220°C and at a frequency of 1 rad/s.

According to an embodiment of the present disclosure, the loss modulus may be $3.0\times10^5$ Pa or less, $1.0\times10^4$ to $3.0\times10^5$ Pa, $2.0\times10^4$ to $1.5\times10^5$ Pa, $5.0\times10^4$ to $1.2\times10^5$ Pa, or $7.0\times10^4$ to $1.1\times10^5$ Pa at a temperature of 190°C and at a frequency of 1 rad/s. When the loss modulus is within the above-defined range, there is an advantage in that the separator shows no flowability.

The meaning of the ratio (A/B) of the storage modulus G' (A) of the separator to the loss modulus G" (B) thereof is a relative measure of elasticity contribution as compared to viscosity contribution.

Particularly, when the ratio is 1 or more, the separator shows properties similar to the properties of a solid. On the other hand, when the ratio is 1 or less, the separator shows properties similar to the properties of a liquid.

Meanwhile, the ratio, A/B, is used as a relative measure determining the homogeneity and flowability of an extruded sheet in casting and orientation processes.

Therefore, it is preferred that the value of A/B is low in order to facilitate a process for manufacturing a separator. In a finished separator, the value of A/B is preferably high, and particularly, A/B is preferably 2 or more according to an embodiment of the present disclosure.

According to an embodiment of the present disclosure, the separator may show a ratio (A/B) of storage modulus G' (A) to loss modulus G" (B) of 2 or more, 2-7, 2-5, 2.1-4.7, or 2.18-4.68, at a range of the frequency of the separator of 1 rad/s or less. When the ratio of A/B is within the above-defined range, there is an advantage in that the separator may retain a function as an insulator, while retaining strength at high temperature.

In another aspect of the present disclosure, there is provided a crosslinked polyolefin separator which shows a gradient of a curve of storage modulus G' vs. frequency of 0.05-0.4, at a range of the frequency of the crosslinked polyolefin separator of $10^{-1}$ to 1 rad/s, in a frequency-loss modulus curve, the horizontal axis of which is the frequency (rad/s) of the crosslinked polyolefin separator converted into a log scale and the vertical axis of which is storage modulus G' (A) and loss modulus G" (B) of the crosslinked polyolefin separator converted into a log scale.

Reference will be made to the above description about the storage modulus and loss modulus.

According to an embodiment of the present disclosure, the separator may show a gradient of a curve of storage modulus G' vs. frequency of 0.05-0.4, 0.07-0.35, 0.1-0.3, 0.12-0.28, or 0.133-0.267, at a range of the frequency of the separator of 1 rad/s or less. When the gradient is within the above-defined range, there is an advantage in that the separator may retain a function as an insulator at high temperature.

According to an embodiment of the present disclosure, the separator may be formed by aqueous crosslinking or UV crosslinking.

According to an embodiment of the present disclosure, the separator may include an ultrahigh-molecular weight polyolefin in an amount of 50 parts by weight or more based on 100 parts by weight of the total polyolefins.

According to the present disclosure, the separator is not particularly limited, as long as it is a crosslinked separator. However, aqueous crosslinking is particularly advantageous in that the separator may have maximized elasticity at high temperature.

Particularly, when the separator is formed by aqueous crosslinking, it includes Si-O-Si bonding, and the content of silicon (Si) in the separator may be 0.01-20 parts by weight based on 100 parts by weight of the separator.

When the separator maintains the above-defined silane content, the crosslinking degree of the separator is maintained at 30-80% to provide a separator having a high meltdown temperature.

According to an embodiment of the present disclosure, the crosslinked polyolefin is formed by UV crosslinking, and includes a plurality of fibrils and pores formed by the fibrils entangled with one another, wherein polyolefin chains forming the fibrils are crosslinked directly with one another.

Herein, 'fibril' refers to one formed through the longitudinal elongation and orientation of the polymer chains

forming a polyolefin porous substrate during the manufacture of the porous substrate so that the binding force between the adjacent molecular chains may be increased and the chains may be assembled in the longitudinal direction. As a result, the crosslinked polyolefin porous substrate according to the present disclosure has a layered structure including a plurality of fibrils aligned in parallel with the substrate surface.

Herein, the expression 'crosslinked directly (direct crosslinking)' refers to a state of direct crosslinking between the polyolefin chains forming the fibrils substantially including polyolefin (preferably, fibrils consisting of polyolefin alone), after the fibrils are provided with reactivity by the addition of a Type 2 photoinitiator. Therefore, crosslinking occurring between a crosslinking agent introduced additionally and the polyolefin chains does not correspond to 'direct crosslinking'.

The term 'direct crosslinking' refers to crosslinking accomplished by a Type 2 photoinitiator.

It is generally known that photoinitiators are classified into Type 1 photoinitiators and Type 2 photoinitiators.

The Type 1 photoinitiator undergoes unimolecular bond cleavage after absorbing light, and then is converted into reactive species. The Type 1 photoinitiator does not require any other chemical species for its function. It is known that when carrying out crosslinking of polyolefin (e.g. polyethylene) chains by using the Type 1 photoinitiator and a curing agent, the initiator or curing agent is bound to radicals generated from the polyethylene chains, resulting in crosslinking.

On the contrary, it is known that the Type 2 photoinitiator undergoes bimolecular reaction, and reacts with another molecule (e.g. co-initiator or synergist) after absorbing light to form a reactive compound.

However, even though the Type 2 photoinitiator is used according to the present disclosure, it forms radicals and is converted into a reactive compound, while hydrogen atoms are removed through hydrogen abstraction merely by light absorption with no aid of another co-initiator or synergist, and allows conversion of polyolefin itself into reactive polyolefin. Therefore, according to an embodiment of the present disclosure, it is possible to provide a crosslinked polyolefin porous substrate which includes polyolefin chains of fibrils formed of polyolefin compounds crosslinked directly. In this case, the polyolefin porous substrate may retain its pore structure before direct crosslinking, as it is, even after direct crosslinking. Therefore, it is possible to provide thermal safety.

The crosslinked polyolefin separator according to the present disclosure may be obtained by the following method, but is not limited thereto.

In still another aspect of the present disclosure, there is provided a method for manufacturing a crosslinked polyolefin separator, including the steps of:

(S1) introducing polyolefin, a diluting agent, an initiator, a crosslinking catalyst and alkoxysilane containing a carbon-carbon double bonded group to an extruder, followed by mixing, to carry out reactive extrusion of a silane-grafted polyolefin composition;
(S2) molding and orienting the reactive extruded silane-grafted polyolefin composition in the form of a sheet;
(S3) extracting the diluting agent from the oriented sheet to obtain a porous membrane;
(S4) thermally fixing the porous membrane, while the porous membrane is oriented at 100-150% based on the width of the porous membrane initially introduced to a thermal fixing bath; and
(S5) carrying out aqueous crosslinking of the thermally fixed porous membrane,

wherein the crosslinked polyolefin separator shows a ratio (A/B) of storage modulus G' (A) to loss modulus G" (B) of 2 or more, at a range of the frequency of the crosslinked polyolefin separator of 1 rad/s or less, in a frequency-loss/storage modulus curve, the horizontal axis of which is the frequency (rad/s) of the crosslinked polyolefin separator converted into a log scale and the vertical axis of which is storage modulus G' (A) and loss modulus G" (B) of the crosslinked polyolefin separator converted into a log scale.

Step (S1) is a step of introducing non-grafted polyolefin, a diluting agent, an initiator, a crosslinking catalyst and alkoxysilane containing a carbon-carbon double bonded group to an extruder, and carrying out mixing and reaction to perform reactive extrusion.

According to an embodiment of the present disclosure, the polyolefin may be polyethylene; polypropylene; polybutylene; polypentene; polyhexene; polyoctene; a copolymer of at least two of ethylene, propylene, butene, pentene, 4-methylpentene, hexane, heptane and octene; or a mixture thereof.

Particularly, the polyethylene includes low-density polyethylene (LDPE), linear low-density polyethylene (LLDPE), high-density polyethylene (HDPE), or the like. Among those, high-density polyethylene having a high crystallization degree and a high resin melting point is most preferred.

According to an embodiment of the present disclosure, the polyolefin may have a weight average molecular weight of 200,000-1,000,000, 220,000-700,000, or 250,000-600,000. According to the present disclosure, it is possible to obtain a separator having excellent strength and heat resistance, while ensuring separator film uniformity and film-forming processability, by using a high-molecular weight polyolefin having a weight average molecular weight of 200,000-1,000,000 as a starting material.

According to an embodiment of the present disclosure, the diluting agent may include liquid or solid paraffin oil, mineral oil, wax, soybean oil, or the like, used currently for manufacturing a separator through a wet process.

According to an embodiment of the present disclosure, the diluting agent may be one capable of liquid-liquid phase separation against polyolefin. For example, the diluting agent may be a phthalic acid ester, such as dibutyl phthalate, dihexyl phthalate, dioctyl phthalate, or the like; aromatic ether, such as diphenyl ether, benzyl ether, or the like; C10-C20 fatty acid, such as palmitic acid, stearic acid, oleic acid, linoleic acid, or the like, C10-C20 fatty acid alcohol, such as palmitic acid alcohol, stearic acid alcohol, oleic acid alcohol, or the like; or a fatty acid ester in which one or at least two fatty acids of saturated or unsaturated fatty acids whose fatty acid group has 4-26 carbon atoms, or unsaturated fatty acids whose double bond is substituted with epoxy are ester-bound with a C1-C10 alcohol having 1-8 hydroxyl groups, such as palmitic acid mono-, di- or tri-ester, stearic acid mono-, di- or tri-ester, oleic acid mono-, di- or tri-ester, linoleic acid mono-, di- or tri-ester, or the like.

The diluting agent may include any one of the above-described ingredients or a mixture of at least two of them.

According to an embodiment of the present disclosure, the content of the diluting agent may be 100-350 parts by weight, 125-300 parts by weight, or 150-250 parts by weight, based on 100 parts by weight of non-grafted polyolefin. When the total content of the diluting agent satisfies the above-defined range, it is possible to reduce the problems caused by an increase in non-grafted polyolefin content, such as a decrease in porosity and pore size, reduced interconnection among pores and a significant decrease in permeability, an increase in viscosity of a polyolefin composition and extrusion load, and a difficulty in processing. It is also possible to reduce the problems caused by a decrease in non-grafted polyolefin content, such as breakage upon orientation and non-uniform thickness, caused by a decrease in compatibility of non-grafted polyolefin with a diluting agent and extrusion of non-grafted polyolefin in the form of gel without thermodynamic blending of non-grafted polyolefin with a diluting agent.

According to an embodiment of the present disclosure, the alkoxysilane containing a carbon-carbon double bonded group is a crosslinking agent inducing silane crosslinking, is grafted to polyolefin through vinyl groups, and functions to perform crosslinking of polyolefin through aqueous crosslinking caused by alkoxy groups.

According to an embodiment of the present disclosure, the alkoxysilane containing a carbon-carbon double bonded group may include a compound represented by the following Chemical Formula 1:

[Chemical Formula 1]

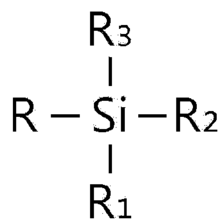

wherein each of Ri, $R_2$ and $R_3$ independently represents a C1-C10 alkoxy group or a C1-C10 alkyl group, with the proviso that at least one of $R_1$, $R_2$ and $R_3$ represents an alkoxy group; and

R represents a vinyl group, an acryloxy group, a methacryloxy group, or a C1-C20 alkyl group, wherein at least one hydrogen atom of the alkyl group is substituted with a vinyl group, an acryl group, an acryloxy group, a methacryloxy group, or a methacryl group.

Meanwhile, R may further include an amino group, an epoxy group or an isocyanate group.

According to an embodiment of the present disclosure, the alkoxysilane containing a carbon-carbon double bonded group may include vinyltrimethoxysilane, vinyltriethoxysilane, vinyltriacetoxysilane, (3-methacryloxypropyl)trimethoxysilane, (3-methacryloxypropyl)triethoxysilane, vinylmethyl dimethoxysilane, vinyl-tris(2-methoxyethoxy)silane, vinylmethyldiethoxysilane, or a mixture of at least two of them.

According to an embodiment of the present disclosure, the content of the alkoxysilane containing a carbon-carbon double bonded group may be 0.1-3.0 parts by weight, 0.2-2.0 parts by weight, or 0.5-1.5 parts by weight, based on 100 parts by weight of the total weight of the polyolefin and the diluting agent. When the content of the alkoxysilane containing a carbon-carbon double bonded group satisfies the above-defined range, it is possible to prevent the problems of a decrease in crosslinking degree, caused by a low silane content and reduced graft ratio, and degradation of the appearance of an extruded sheet, caused by a high silane content and residue of unreacted silane.

According to an embodiment of the present disclosure, the initiator may be any initiator, as long as it can generate radicals. Non-limiting examples of the initiator include 2,5-dimethyl-2,5-di(tert-butylperoxy)hexane (DHBP), benzoyl peroxide, acetyl peroxide, dilauryl peroxide, di-tert-butyl peroxide, dicumyl peroxide, cumyl peroxide, hydrogen peroxide, potassium persulfate, or the like.

According to an embodiment of the present disclosure, the content of the initiator may be 0.1-20 parts by weight, particularly 1-10 parts by weight, more particularly 2-5 parts by weight, based on 100 parts by weight of the alkoxysilane

containing a carbon-carbon double bonded group. When the content of the initiator satisfies the above-defined range, it is possible to prevent the problems of a decrease in silane graft ratio, caused by a low content of initiator, and crosslinking between polyethylene molecules in an extruder, caused by a high content of initiator.

According to an embodiment of the present disclosure, the crosslinking catalyst is added to accelerate silane crosslinking.

According to an embodiment of the present disclosure, the crosslinking catalyst may be a carboxylate of metal, such as tin, zinc, iron, zinc or cobalt, organic base, inorganic acid or an organic acid. Non-limiting examples of the crosslinking catalyst include metal carboxylates, such as dibutyltin dilaurate, dibutyltin diacetate, stannous acetate, stannous caprylate, zinc naphthenate, zinc caprylate and cobalt naphthenate, organic bases, such as ethylamine, dibutylamine, hexylamine and pyridine, inorganic acids, such as sulfuric acid and hydrochloric acid, and organic acids, such as toluene sulfonic acid, acetic acid, stearic acid and maleic acid. Such crosslinking agents may be used alone or in combination.

According to an embodiment of the present disclosure, the content of the crosslinking catalyst may be 0.1-20 parts by weight, 1-10 parts by weight, or 2-5 parts by weight, based on 100 parts by weight of the alkoxysilane compound containing a carbon-carbon double bonded group. When the content of the crosslinking catalyst satisfies the above-defined range, it is possible to carry out silane crosslinking to a desired level and to prevent undesired side reactions in a lithium secondary battery. In addition, there is no cost-related problem, such as waste of the catalyst.

According to an embodiment of the present disclosure, the content of the diluting agent may be 100-350 parts by weight, 125-300 parts by weight, or 150-250 parts by weight, based on 100 parts by weight of the polyolefin. When the total content of the diluting agent satisfies the above-defined range, it is possible to reduce the problems caused by an increase in a polyolefin content, such as a decrease in porosity and pore size, reduced interconnection among pores and a significant decrease in permeability, an increase in viscosity of a polyolefin composition and extrusion load, and a difficulty in processing. It is also possible to reduce the problems caused by a decrease in a polyolefin content, such as breakage upon orientation and non-uniform thickness, caused by a decrease in compatibility of a polyolefin with a diluting agent and extrusion of a polyolefin in the form of gel without thermodynamic blending of a polyolefin with a diluting agent.

According to an embodiment of the present disclosure, if necessary, the silane-grafted polyolefin composition may further include conventional additives for improving specific functions, such as an antioxidant, UV stabilizer, an antistatic agent, a nucleating agent, or the like.

According to an embodiment of the present disclosure, the reactive extrusion step may be carried out by using a uniaxial extruder or a biaxial extruder.

Next, the reactive extruded silane-grafted polyolefin composition is molded in the form of a sheet and oriented (S2).

For example, the reactive extruded silane-grafted polyolefin composition is extruded by using an extruder equipped with a T-die, or the like, and then cooled extrudate may be formed by using a general casting or calendaring process using water-cooling or air-cooling mode.

According to an embodiment of the present disclosure, it is possible to provide a separator having improved mechanical strength and puncture strength through the orientation step as mentioned above.

According to an embodiment of the present disclosure, the orientation may be carried out by sequential or simultaneous orientation using a roll or tenter. The orientation ratio may be 3 times or more, or 4-10 times, each in the machine direction and transverse direction, and the total orientation ratio may be 14-100 times. When the orientation ratio satisfies the above-defined ratio, it is possible to prevent the problem of insufficient orientation in one direction, a failure in balance of physical properties between the machine direction and the transverse direction, and degradation of tensile strength and puncture strength. When the total orientation ratio satisfies the above-defined range, it is possible to prevent the problems of non-orientation or a failure in pore formation.

According to an embodiment of the present disclosure, the orientation temperature may be varied with the melting point of polyolefin and concentration and type of the diluting agent.

According to an embodiment of the present disclosure, when the polyolefin is polyethylene and the diluting agent is liquid paraffin, the orientation temperature may be 70-160°C, 90-140°C, or 100-130°C in the case of orientation in the machine direction (MD), may be 90-180°C, 110-160°C, or 120-150°C in the case of orientation in the transverse direction (TD), and may be 90-180°C, 110-160°C, or 120-150°C, when bidirectional orientation is carried out at the same time. When the orientation temperature satisfies the above-defined range, it is possible to prevent the problem of breakage or non-orientation caused by the lack of softness resulting from a low orientation temperature. In addition, it is possible to prevent partial over-orientation or a difference in physical properties, caused by a high orientation temperature.

Then, the diluting agent is extracted from the molded and oriented sheet to obtain a silane-grafted polyolefin porous membrane (S3).

According to an embodiment of the present disclosure, the diluting agent may be extracted from the porous membrane by using an organic solvent, and then the porous membrane may be dried.

According to an embodiment of the present disclosure, the organic solvent is not particularly limited, as long as it is capable of extraction of the diluting agents. However, it is suitable to use methyl ethyl ketone, methylene chloride or hexane having high extraction efficiency and showing a high drying rate.

According to an embodiment of the present disclosure, the extraction may be any conventional solvent extraction process, such as an immersion process, a solvent spray process or an ultrasonication process, and such processes may be used alone or in combination. After carrying out extraction, the content of residual diluting agents should be preferably 1 wt% or less. When the content of residual diluting agent is larger than 1 wt%, physical properties are degraded and permeability of the porous membrane is reduced. The content of residual diluting agent may be affected by extraction temperature and extraction time. To increase the solubility of diluting agents in the organic solvent, a higher extraction temperature is preferred. However, considering the safety problem caused by boiling of the organic solvent, the extraction temperature is preferably 40°C or lower. When the extraction temperature equals to or is lower than the solidifying point of the diluting agent, extraction efficiency may be decreased significantly. Thus, the extraction temperature should be higher than the solidifying point of the diluting agent.

In addition, the extraction time may be varied with the thickness of a porous membrane. In the case of a separator having a thickness of 5-15 μm, the extraction time may be 1-3 minutes suitably.

Then, the porous membrane is thermally fixed (S4). The thermal fixing is a process of fixing and heating the porous membrane so that the porous membrane to be shrunk may be fixed forcibly to remove residual stress.

Herein, in the thermal fixing step, the porous membrane is oriented at 100-150% based on the width of the porous membrane introduced initially to a thermal fixing bath. According to an embodiment of the present disclosure, the orientation may be carried out at 100%, 105% or 110% or more, and 150%, 150% or 130% or less, within the above-defined range. When the orientation ratio satisfies the above-defined range, it is possible to remove the residual stress of the separator effectively, while ensuring a desired thickness and porosity.

Herein, step (S4) is a step of thermally fixing the porous membrane, wherein the porous membrane is subjected to the first orientation at 100-180% based on the width of the porous membrane initially introduced to a thermal fixing bath, and then is subjected to the second orientation at a reduced orientation ratio of 100-150% based on the width of the porous membrane initially introduced to a thermal fixing bath. In other words, the porous membrane subjected to the second orientation has a smaller width as compared to the porous membrane subjected to the first orientation.

When the width of the porous membrane is reduced in the second orientation as compared to the first orientation, it is possible to reduce the heat shrinkage of the resultant separator.

When the orientation is carried out excessively beyond the above-defined range, crosslinking spots where crosslinking occurs may be spaced apart from one another, thereby making it difficult to perform effective crosslinking. As a result, it is not possible to obtain a desired effect of increasing storage modulus sufficiently, and thus the resultant separator shows rheological properties similar to those of conventional non-crosslinked separators.

Herein, the ratio (t2/t1) of the time (t1) at which point the first orientation is started after initially introducing the porous membrane to a thermal fixing bath based on the time (t2) at which point the second orientation is started after initially introducing the porous membrane to a thermal fixing bath is 0.5-1.5, 0.7-1.3, or 0.8-1.2.

A higher thermal fixing temperature is favorable to a decrease in shrinkage. However, when the thermal fixing temperature is excessively high, the porous membrane may be molten partially to cause blocking of the micropores formed in the porous membrane, resulting in a decrease in permeability. When the polyolefin is polyethylene, the thermal fixing temperature may be 100-140°C, 105-135°C, or 110-130°C. When the polyolefin is polyethylene and the thermal fixing temperature satisfies the above-defined range, polyolefin molecules may be rearranged to remove residual stress of the porous membrane, and the problem of pore blocking of the porous membrane caused by partial melting may be reduced. As the thermal fixing temperature is increased, the heat shrinkage of the separator may be improved. Meanwhile, as the thermal fixing temperature is reduced, the resistance of the separator may be reduced.

When the thermal fixing temperature is high, the thermal fixing time is set to be a relatively short time. When the thermal fixing temperature is low, the thermal fixing time is set to be a relatively long time. According to an embodiment of the present disclosure, the thermal fixing time may be 10-120 seconds, 20-90 seconds, or 30-60 seconds. When the thermal fixing is carried out for the above-defined range of time, polyolefin molecules may be rearranged to remove residual stress of the porous membrane, and the problem of pore blocking of the porous membrane caused by partial melting may be reduced.

After that, the thermally fixed porous membrane is crosslinked in the presence of water (S5). According to an embodiment of the present disclosure, the crosslinking may be carried out at 60-100°C, 65-95°C, or 70-90°C. According to an embodiment of the present disclosure, the crosslinking may be carried out under a humidity of 60-95% for 6-50 hours. To accelerate the crosslinking, a crosslinking catalyst may be used. In general, as a crosslinking catalyst, a carboxylate of metal, such as tin, zinc, iron, zinc or cobalt, organic base, inorganic acid or an organic acid may be used. Particular examples of the crosslinking catalyst include dibutyltin dilaurate, dibutyltin diacetate, stannous acetate, stannous caprylate, zinc naphthenate, zinc caprylate, cobalt naphthenate, ethylamine, dibutylamine, hexylamine, pyridine, inorganic acids, such as sulfuric acid and hydrochloric acid, organic acids, such as toluene sulfonic acid, acetic acid,

stearic acid and maleic acid, or the like. The crosslinking catalyst may be used by adding it during the preparation of a silane-grafted polyolefin solution, by applying a solution or dispersion of a crosslinking catalyst to the porous membrane, or the like.

In still another aspect of the present disclosure, there is provided a method for manufacturing a crosslinked polyolefin separator.

Particularly, there is provided a method for manufacturing a crosslinked polyolefin separator which includes a crosslinked polyolefin porous substrate including a plurality of fibrils and pores formed by the fibrils entangled with one another, wherein polyolefin chains forming the fibrils are crosslinked directly with one another, the method including the steps of:

applying a Type 2 photoinitiator composition including a Type 2 photoinitiator to a non-crosslinked polyolefin porous substrate; and
irradiating UV rays to the polyolefin porous substrate coated with the Type 2 photoinitiator composition, wherein the UV rays are irradiated at an irradiation light dose of 10-2500 $mJ/cm^2$, and
the crosslinked polyolefin separator shows a ratio (A/B) of storage modulus G' (A) to loss modulus G" (B) of 2 or more, at a range of the frequency of the crosslinked polyolefin separator of 1 rad/s or less, in a frequency-loss/storage modulus curve, the horizontal axis of which is the frequency (rad/s) of the crosslinked polyolefin separator converted into a log scale and the vertical axis of which is storage modulus G' (A) and loss modulus G" (B) of the crosslinked polyolefin separator converted into a log scale.

In other words, according to the present disclosure, there is provided a crosslinked polyolefin separator having a specific relationship of G' with G" and a specific G' gradient. The separator having such a relationship can function as an insulator, while maintaining its strength at high temperature. In other words, when the temperature of a lithium secondary battery is rapidly increased due to an abnormal external condition, the storage modulus representing the solid properties of the separator is maintained at a higher value as compared to the loss modulus representing the liquid properties of the separator so that the separator may retain its shape with no loss of its function as an insulator.

The crosslinked polyolefin separator may be obtained by using alkoxysilane containing a carbon-carbon double bonded group, while the orientation ratio during the thermal fixing is controlled, as described above. In addition, the crosslinked polyolefin separator may be obtained by using a Type 2 photoinitiator, as described hereinafter.

First, a Type 2 photoinitiator composition is applied to a polyolefin porous substrate.

According to an embodiment of the present disclosure, the Type 2 photoinitiator may include thioxanthone (TX), a thioxanthone derivative, benzophenone (BPO), a benzophenone derivative, or a mixture of two or more of them.

Particular examples of the thioxanthone derivative may include, but are not limited to: 2-isopropylthioxanthone, 2-chlorothioxanthone, 2-dodecylthioxanthone, 2,4-diethylthioxanthone, 2,4-dimethylthioxanthone, 1-methoxycarbonylthioxanthone, 2-ethoxycarbonylthioxanthone, 3 -(2-methoxyethoxycarbonyl)-thioxanthone, 4-butoxycarbonyl-thioxanthone, 3-butoxycarbonyl-7-methylthioxanthone, 1-cyano-3-chlorothioxanthone, 1-ethoxycarbonyl-3 -chlorothioxanthone, 1-ethoxycarbonyl-3-ethoxythioxanthone, 1-ethoxycarbonyl-3 -aminothioxanthone, 1-ethoxycarbonyl-3-phenylsulfurylthioxanthone, 3,4-di[2-(2-methoxyethyoxy)ethoxycarbonyl]thioxanthone, 1-ethoxycarbonyl-3-(1-methyl-1-morpholinoethyl)-thioxanthone, 2-methyl-6-dimethoxymethyl-thioxanthone, 2-methyl-6-(1,1-dimethoxy-benzyl)-thioxanthone, 2-morpholinomethylthioxanthone, 2-methyl-6-morpholinomethyl-thioxanthone, N-allylthioxanthone-3,4-dicarboximide, N-octylthioxanthone-3,4-dicarboximide, N-(1,1,3,3-tetramethylbutyl)-thioxanthone-3,4,-dicarboximide, 1-phenoxythioxanthone, 6-ethoxycarbonyl-2-methoxythioxanthone, 6-ethoxycarbonyl-2-methylthioxanthone, thioxanthone-2-polyethylene glycol ester, 2-hydroxy-3-(3,4-dimethyl-9-oxo-9H-thioxanthone-2-yloxy)-N,N,N-trimethyl-1-propanaminium chloride, or the like.

According to the present disclosure, particular examples of the benzophenone derivative may include, but are not limited to: 4-phenylbenzophenone, 4-methoxybenzophenone, 4,4'-dimethoxy-benzophenone, 4,4'-dimethylbenzophenone, 4,4'-dichlorobenzophenone, 4,4'-dimethylaminobenzophenone, 4,4'-diethylaminobenzophenone, 4-methylbenzophenone, 2,4,6-trimethylbenzophenone, 4-(4-methylthiophenyl)-benzophenone, 3,3' -dimethyl-4-methoxy-benzophenone, methyl-2-benzoyl benzoate, 4-(2-hydroxyethylthio)-benzophenone, 4-(4-tolylthio)benzophenone, 4-benzoyl-N,N,N-trimethylbenzenemethanaminium chloride, 2-hydroxy-3-(4-benzoylphenoxy)-N,N,N-trimethyl-propanaminium chloride monohydrate, 4-hydroxybenzophenone, 4-(13-acryloyl-1,4,7,10,13-pentaoxatridecyl)-benzophenone, 4-benzoyl-N,N-dimethyl-N-[2-(1-oxo-2-propenyl)oxy]ethyl-benzenemethaneminium chloride, or the like.

According to the present disclosure, when using the Type 2 photoinitiator, there is an advantage in that crosslinking can be accomplished with a lower light dose as compared to the crosslinking using a Type 1 photoinitiator and/or a crosslinking agent.

According to an embodiment of the present disclosure, the Type 2 photoinitiator may be 2-isopropyl thioxanthone, thioxanthone or a mixture thereof. When the Type 2 photoinitiator is 2-isopropyl thioxanthone, thioxanthone or a mixture thereof, it is possible to carry out crosslinking with a lower dose, such as 500 $mJ/cm^2$, as compared to the

crosslinking using any other photoinitiator, such as benzophenone.

According to an embodiment of the present disclosure, the composition including a Type 2 photoinitiator may be prepared by dissolving the Type 2 photoinitiator in a solvent. The solvent may be acetone, isopropyl alcohol (IPA), N-methyl pyrrolidone (NMP), methyl alcohol, or a mixture of two or more of them. The Type 2 photoinitiator may be present in the composition at a concentration of 0.01-0.4 wt%, 0.01-0.3 wt%, 0.03-0.3 wt%, or 0.05-0.2 wt%. When the concentration is excessively higher than the above-defined range, rapid crosslinking occurs during UV irradiation to cause shrinking of the separator, and scission of the main chain of polyethylene occurs to cause degradation of mechanical strength. Within the above-defined range of Type 2 photoinitiator content, suitable crosslinking may be carried out with no shrinking during crosslinking.

Reference will be made to the above description about the polyolefin porous substrate that may be used in the present disclosure.

According to an embodiment of the present disclosure, the composition including a Type 2 photoinitiator (Type 2 photoinitiator composition) may be applied to the polyolefin porous substrate by dipping the polyolefin porous substrate in the Type 2 photoinitiator composition, or by applying the Type 2 photoinitiator composition to at least one surface of the polyolefin porous substrate through spray coating, or the like. However, the scope of the present disclosure is not limited thereto. For example, the Type 2 photoinitiator composition may be applied to the polyolefin porous substrate for 0.1 seconds to 5 minutes, but the scope of the present disclosure is not limited thereto. Then, the polyolefin porous substrate coated with the Type 2 photoinitiator composition may be dried. For example, the drying may be carried out at room temperature for 30 seconds to 10 minutes.

After that, UV rays are irradiated to the polyolefin porous substrate coated with the composition, wherein the UV irradiation dose is 10-2500 $mJ/cm^2$.

UV irradiation is carried out by using a UV curing system, while controlling UV irradiation time and irradiation dose suitably considering the other conditions, such as the weight ratio of photoinitiator. For example, the UV irradiation time and irradiation dose may be set in such a manner that the polyolefin fibrils may be crosslinked sufficiently to provide the polyolefin porous substrate with a meltdown temperature of about 160°C or higher, or 170°C or higher, and the polyolefin porous substrate may not be damaged by the heat generated from a UV lamp. In addition, the UV lamp used in the UV curing system may be selected suitably from a high-pressure mercury lamp, a metal lamp, a gallium lamp or the like, depending on the photoinitiator used for crosslinking, and the light emission wavelength and dose may be selected suitably depending on the overall process.

According to an embodiment of the present disclosure, UV rays are irradiated to the polyolefin porous substrate coated with the Type 2 photoinitiator composition, wherein the UV light dose is 10-2500 $mJ/cm^2$, 50-1000 $mJ/cm^2$, or 150-500 $mJ/cm^2$.

According to an embodiment of the present disclosure, 'UV light dose' may be determined by using a portable light dose measuring instrument called H type UV bulb and UV power puck available from Miltec. When light dose is determined by using H type UV bulb available from Miltec, three types of wavelength values of UVA, UVB and UVC are provided depending on wavelength, and UV rays used herein corresponds to UVA.

According to the present disclosure, the method for determining 'UV light dose' includes passing UV power puck through a conveyer in the presence of a light source under the same condition as a sample, and the UV light dose value displayed in UV power puck is defined as 'UV light dose'.

Use of the photoinitiator causes crosslinking of fibrils so that the separator may retain storage modulus even at high temperature with a significantly slight change in loss modulus. In addition, storage modulus is known to have a gradient of about 2 theoretically depending on a change in frequency before a photoinitiator is used, in the case of a conventional polymer conformed to Maxwell mode. However, when elasticity is increased rapidly, while crosslinking occurs, such a change in gradient becomes gentle.

In yet another aspect of the present disclosure, there is provided a lithium secondary battery including the above-described separator.

Particularly, there is provided a lithium secondary battery including a positive electrode, a negative electrode and a separator interposed between the positive electrode and the negative electrode, wherein the separator is the above-described crosslinked polyolefin separator, and the positive electrode includes a current collector; and a layer of positive electrode active material disposed on the current collector, wherein the positive electrode active material includes $Li[Ni_aCo_bMn_cM1_dM2_e]O_2$ (wherein each of M1 and M2 independently any one selected from the group consisting of Al, Ni, Co, Fe, Mn, V, Cr, Ti, W, Ta, Mg and Mo, each of a, b, c, d and e independently represents the atomic fraction of each element forming the oxide, $a \geq 0.5$, $a + b + c + d + e = 1$, and $b > d > e$).

The positive electrode active material is a nickel-rich (Ni-rich) positive electrode active material having a layered structure, and is advantageous in that a high capacity of 200 mAh/g or more can be realized. On the other hand, the positive electrode including such a positive electrode active material shows a low self-heating temperature, and thus has relatively low safety.

The present inventors have conducted intensive studies to solve the safety-related problem. We have found

that when the above-described separator is used in combination with the positive electrode, it is possible to improve the safety significantly.

Examples will be described more fully hereinafter so that the present disclosure can be understood with ease. The following examples may, however, be embodied in many different forms and should not be construed as limited to the exemplary embodiments set forth therein. Rather, these exemplary embodiments are provided so that the present disclosure will be thorough and complete, and will fully convey the scope of the present disclosure to those skilled in the art.

**Example 1**

First, polyethylene having a weight average molecular weight of 600,000 (Hanwha Total, VO601) as polyolefin was introduced to an extruder hopper and conveyed at a flow rate of 3 kg/hr. Next, liquid paraffin oil (Kukdong Oil & Chem. LP350) as a diluting agent was introduced to the first injection port at a flow rate of 5 kg/hr and mixed with the polyethylene conveyed to the extruder. Then, liquid paraffin oil (Kukdong Oil & Chem. LP350) as a diluting agent was mixed with 2,5-dimethyl-2,5-di(tert-butylperoxy)hexane as an initiator and vinyltrimethoxysilane as alkoxysilane containing a carbon-carbon double bonded group at a ratio of 0.05 parts by weight and 2.5 parts by weight, respectively, based on 100 parts by weight of the combined weight of the polyolefin and the diluting agent, and the resultant mixture was supplied to the second injection port at a flow rate of 2 kg/hr.

Then, reactive extrusion was carried out at a temperature of 200°C to obtain a silane-grafted polyethylene composition.

The resultant silane-grafted polyethylene composition was molded into a sheet-like shape through a T-die and cold casting roll operating at 40°C. Then, MD orientation was carried out at a ratio of 6 times in length by using a speed ratio of a roll maintained at 110°C, and TD orientation was carried out at a ratio of 7 times in width by using a tenter in an oven maintained at 120°C. After that, the oriented sheet was dipped in a diluting bath containing methylene chloride to remove the diluting agent remaining in the oriented sheet to provide a porous membrane having pores formed therein. Then, orientation was further carried out in the width direction in a thermal fixing bath maintained at 128°C to a ratio of 20% based on the width of the initially introduced porous membrane, and relaxation was carried out in the latter part of the thermal fixing bath. In this manner, a porous membrane having a width increased by 10% as compared to the width of the initial porous membrane was wound.

The wound porous membrane was allowed to stand in an oven maintained at 60°C under a relative humidity of 85% for 2 days to obtain a crosslinked polyolefin separator.

The resultant separator had a thickness of 9 μm and an air permeation time of 77 sec/100 cc.

**Example 2**

A crosslinked polyolefin separator was obtained in the same manner as Example 1, except that the MD orientation ratio and the TD orientation ratio in the orientation step were controlled to 5.5 times and 6 times, respectively. The resultant separator had a thickness of 9 μm and an air permeation time of 74 sec/100 cc.

**Example 3**

A crosslinked polyolefin separator was obtained in the same manner as Example 1, except that orientation was further carried out in the width direction in the thermal fixing bath to a ratio of 70% based on the width of the initially introduced porous membrane, and relaxation was carried out in the latter part of the thermal fixing bath, and then a porous membrane having a width increased by 40% as compared to the width of the initial porous membrane was wound. The resultant separator had a thickness of 9 μm and an air permeation time of 70 sec/100 cc.

**Comparative Example 1**

A polyolefin separator was obtained in the same manner as Example 1, except that the initiator and alkoxysilane containing a carbon-carbon double bonded group were not added. In other words, the resultant separator was a non-crosslinked polyolefin separator. The resultant separator had a thickness of 9 μm and an air permeation time of 89 sec/100 cc.

**Example 4**

First, 2-isopropylthioxanthone (ITX, available from Sigma Aldrich) as a Type 2 photoinitiator was dissolved in acetone to a concentration of 0.5 wt% to prepare a Type 2 photoinitiator composition.

Next, the Type 2 photoinitiator composition was applied to the surface of the non-crosslinked polyolefin separator

according to Comparative Example 1 through a dip coating process. Then, acetone was dried at a temperature of 60°C.

Then, UV rays were irradiated to the top surface of the non-crosslinked polyolefin separator coated with the Type 2 photoinitiator composition with an integrated light dose, i.e. UV irradiation light dose of 500 mJ/$cm^2$, wherein UV irradiation intensity was set to 80% of the UV light source and the line speed was set to 10 m/min. In this manner, a crosslinked polyolefin separator was obtained. The resultant separator had a thickness of 9 μm and an air permeation time of 90 sec/100 cc.

**Comparative Example 2**

A non-crosslinked polyolefin separator (S10W, available from Asahi) including a ultrahigh-molecular weight polyethylene and a small amount of polypropylene was prepared. The separator had a thickness of 9 μm and an air permeation time of 92 sec/100 cc.

**Example 5**

First, 2-isopropylthioxanthone (ITX, available from Sigma Aldrich) as a Type 2 photoinitiator was dissolved in acetone to a concentration of 0.5 wt% to prepare a Type 2 photoinitiator composition.

Next, the Type 2 photoinitiator composition was applied onto the non-crosslinked polyolefin separator according to Comparative Example 2 through a dip coating process. Then, acetone was dried at a temperature of 60°C.

Then, UV rays were irradiated to the top surface of the non-crosslinked polyolefin separator coated with the Type 2 photoinitiator composition with an integrated light dose, i.e. UV irradiation light dose of 500 mJ/$cm^2$, wherein UV irradiation intensity was set to 80% of the UV light source and the line speed was set to 10 m/min. In this manner, a crosslinked polyolefin separator was obtained. The resultant separator had a thickness of 9 μm and an air permeation time of 91 sec/100 cc.

**Comparative Example 3**

Prepared was a non-crosslinked polyolefin separator (DB0905, available from Toray) having a tri-layer structure including a core layer having a low shut-down temperature and skin layers applied to both surfaces of the core layer and having a high meltdown temperature, and having a thickness of 9 μm. The separator had a thickness of 9 μm and an air permeation time of 88 sec/100 cc.

**Comparative Example 4**

First, 2-isopropylthioxanthone (ITX, available from Sigma Aldrich) as a Type 2 photoinitiator was dissolved in acetone to a concentration of 0.5 wt% to prepare a Type 2 photoinitiator composition.

Next, the Type 2 photoinitiator composition was applied onto the non-crosslinked polyolefin separator according to Comparative Example 3 through a dip coating process. Then, acetone was dried at a temperature of 60°C.

Then, UV rays were irradiated to the top surface of the non-crosslinked polyolefin separator coated with the Type 2 photoinitiator composition with an integrated light dose, i.e. UV irradiation light dose of 5,000 mJ/$cm^2$, wherein UV irradiation intensity was set to 80% of the UV light source and the line speed was set to 10 m/min. In this manner, a crosslinked polyolefin separator was obtained. The resultant separator had a thickness of 9 μm and an air permeation time of 88 sec/100 cc. It can be seen from Comparative Example 4 that the polyolefin chains are cleaved due to such an excessively high UV irradiation light dose.

**Comparative Example 5**

A crosslinked polyolefin separator was obtained in the same manner as Example 1, except that orientation was further carried out in the width direction in the thermal fixing bath to a ratio of 85% based on the width of the initially introduced porous membrane, and relaxation was carried out in the latter part of the thermal fixing bath, and then a porous membrane having a width increased by 55% as compared to the width of the initial porous membrane was wound. The resultant separator had a thickness of 9 μm and an air permeation time of 66 sec/100 cc. In other words, Comparative Example 5 is carried out in the same manner as Example 1, except that the orientation ratio in the thermal fixing bath was 185%. In the case of Comparative Example 5, the porous membrane was oriented excessively to cause cleavage of fibrils, resulting in a failure in crosslinking.

**Comparative Example 6**

A non-crosslinked polyolefin separator was obtained in the same manner as Comparative Example 1, except that each of the first antioxidant (Irganox 1010, available from BASF) and the second antioxidant (Irgafos 168, available from 168) was introduced at 8,000 ppm. Then, a UV crosslinked polyolefin separator was obtained in the same manner as Example 4. The resultant separator had a thickness of 9 $\mu$m and an air permeation time of 92 sec/100 cc. In the case of Comparative Example 6, the porous membrane includes an excessively high content of antioxidants, and thus crosslinking does not occur smoothly.

**Test Examples**

**Determination of Storage Modulus and Loss Modulus**

Each of the separators according to Examples and Comparative Examples was analyzed through a frequency sweep test at a temperature of 190°C by using a rheological property analyzer (ARES-G2, available from TA Instruments) to determine the storage modulus G' at a frequency of 1 rad/s, loss modulus G" at 1 rad/s and a gradient of storage modulus G' at a frequency of $10^{-1}$ to 1 rad/s. The results are shown in the following Table 1. Meanwhile, the flowability of each separator can be determined from G' and G".

**Determination of Meltdown Temperature of Separator**

Each of the separators according to Examples and Comparative Examples was evaluated in terms of meltdown temperature by using Q400 instrument available from TA through thermomechanical analysis (TMA). The results are shown in the following Table 1.

[Table 1]

| | G' (Pa) (A) | G" (Pa) (B) | A/B (G'/ G") | G' gradient | Meltdown temperature (°C) |
|---|---|---|---|---|---|
| Ex. 1 | 351,229 | 76,336 | 4.60 | 0.165 | 192 |
| Ex. 2 | 347,717 | 77,099 | 4.51 | 0.160 | 188 |
| Ex. 3 | 376,681 | 80,548 | 4.68 | 0.133 | 195 |
| Ex. 4 | 193,176 | 83,969 | 2.30 | 0.165 | 177 |
| Ex. 5 | 218,867 | 100,190 | 2.18 | 0.267 | 172 |
| Comp. Ex. 1 | 98,838 | 92,341 | 1.07 | 0.620 | 148 |
| Comp. Ex. 2 | 158,599 | 119,124 | 1.33 | 0.550 | 150 |
| Comp. Ex. 3 | 139,576 | 87,239 | 1.60 | 0.415 | 158 |
| Comp. Ex. 4 | 122,827 | 79,823 | 1.54 | 0.430 | 161 |
| Comp. Ex. 5 | 96,861 | 86,801 | 1.12 | 0.634 | 155 |
| Comp. Ex. 6 | 99,471 | 90,427 | 1.10 | 0.544 | 151 |

Referring to Table 1, at a frequency of the crosslinked polyolefin separator of 1 rad/s or less, each of the crosslinked polyolefin separators obtained from Examples 1-5 and satisfying a ratio (A/B) of storage modulus G' (A) to loss modulus G" (B) of 2 or more, or a gradient of storage modulus G' (A) vs. frequency of 0.05-0.4 shows a significantly higher meltdown temperature as compared to the separators according to Comparative Examples 1-6. Therefore, it can be seen that each of the crosslinked polyolefin separators according to Examples 1-5 shows significantly improved thermal safety.

## Claims

1. A crosslinked polyolefin separator which shows a ratio (A/B) of storage modulus G' (A) to loss modulus G" (B) of 2 or more, at a range of the frequency of the crosslinked polyolefin separator of 1 rad/s or less, in a frequency-loss/storage modulus curve, the horizontal axis of which is the frequency (rad/s) of the crosslinked polyolefin separator

converted into a log scale and the vertical axis of which is storage modulus G' (A) and loss modulus G" (B) of the crosslinked polyolefin separator converted into a log scale.

**2.** A crosslinked polyolefin separator which shows a gradient of a curve of storage modulus G' vs. frequency of 0.05-0.4, at a range of the frequency of the crosslinked polyolefin separator of $10^{-1}$ to 1 rad/s, in a frequency-loss modulus curve, the horizontal axis of which is the frequency (rad/s) of the crosslinked polyolefin separator converted into a log scale and the vertical axis of which is storage modulus G' (A) and loss modulus G" (B) of the crosslinked polyolefin separator converted into a log scale.

**3.** The crosslinked polyolefin separator according to claim 1 or 2, wherein the storage modulus is $1.0\times10^5$ to $1.0\times10^7$ Pa.

**4.** The crosslinked polyolefin separator according to claim 1 or 2, wherein the loss modulus is $3.0\times10^5$ Pa or less.

**5.** The crosslinked polyolefin separator according to claim 1 or 2, which is formed by aqueous crosslinking or UV crosslinking.

**6.** The crosslinked polyolefin separator according to claim 5, which is formed by aqueous crosslinking, comprises a Si-O-Si bond therein, and has a silicon (Si) content of 0.01-20 parts by weight based on 100 parts by weight of the crosslinked polyolefin separator.

**7.** The crosslinked polyolefin separator according to claim 5, which is formed by UV crosslinking, and comprises a plurality of fibrils and pores formed by the fibrils entangled with one another, wherein polyolefin chains forming the fibrils are crosslinked directly with one another.

**8.** A lithium secondary battery comprising a positive electrode, a negative electrode and a separator interposed between the positive electrode and the negative electrode, wherein the separator is the crosslinked polyolefin separator as defined in claim 1 or 2, and

the positive electrode comprises a current collector; and a layer of positive electrode active material disposed on the current collector,
wherein the positive electrode active material comprises $Li[Ni_aCo_bMn_cM1_dM2_e]O_2$ (wherein each of M1 and M2 independently any one selected from the group consisting of Al, Ni, Co, Fe, Mn, V, Cr, Ti, W, Ta, Mg and Mo, each of a, b, c, d and e independently represents the atomic fraction of each element forming the oxide, $a \geq 0.5$, $a + b + c + d + e = 1$, and $b > d > e$).

**9.** A method for manufacturing a crosslinked polyolefin separator, comprising the steps of:

(S1) introducing polyolefin, a diluting agent, an initiator, a crosslinking catalyst and alkoxysilane containing a carbon-carbon double bonded group to an extruder, followed by mixing, to carry out reactive extrusion of a silane-grafted polyolefin composition;
(S2) molding and orienting the reactive extruded silane-grafted polyolefin composition in the form of a sheet;
(S3) extracting the diluting agent from the oriented sheet to obtain a porous membrane;
(S4) thermally fixing the porous membrane, while the porous membrane is oriented at 100-150% based on the width of the porous membrane initially introduced to a thermal fixing bath; and
(S5) carrying out aqueous crosslinking of the thermally fixed porous membrane,

wherein the crosslinked polyolefin separator shows a ratio (A/B) of storage modulus G' (A) to loss modulus G" (B) of 2 or more, at a range of the frequency of the crosslinked polyolefin separator of 1 rad/s or less, in a frequency-loss/storage modulus curve, the horizontal axis of which is the frequency (rad/s) of the crosslinked polyolefin separator converted into a log scale and the vertical axis of which is storage modulus G' (A) and loss modulus G" (B) of the crosslinked polyolefin separator converted into a log scale.

**10.** The method for manufacturing a crosslinked polyolefin separator according to claim 9, wherein step (S4) is a step of thermally fixing the porous membrane, wherein the porous membrane is subjected to the first orientation at 100-180% based on the width of the porous membrane initially introduced to a thermal fixing bath, and then is subjected to the second orientation at a reduced orientation ratio of 100-150% based on the width of the porous membrane initially introduced to a thermal fixing bath.

**11.** The method for manufacturing a crosslinked polyolefin separator according to claim 10, wherein the ratio (t2/t1) of the time (t1) at which point the first orientation is started after initially introducing the porous membrane to a thermal fixing bath based on the time (t2) at which point the second orientation is started after initially introducing the porous membrane to a thermal fixing bath is 0.5-1.5.

**12.** The method for manufacturing a crosslinked polyolefin separator according to claim 9, wherein the thermal fixing temperature is 100-140°C, and the thermal fixing time is 10-120 seconds.

**13.** A method for manufacturing a crosslinked polyolefin separator which comprises a crosslinked polyolefin porous substrate comprising a plurality of fibrils and pores formed by the fibrils entangled with one another, wherein polyolefin chains forming the fibrils are crosslinked directly with one another, the method comprising the steps of:

applying a Type 2 photoinitiator composition comprising a Type 2 photoinitiator to a non-crosslinked polyolefin porous substrate; and
irradiating UV rays to the polyolefin porous substrate coated with the Type 2 photoinitiator composition, wherein the UV rays are irradiated at a dose of 10-2500 $mJ/cm^2$, and
the crosslinked polyolefin separator shows a ratio (A/B) of storage modulus G' (A) to loss modulus G" (B) of 2 or more, at a range of the frequency of the crosslinked polyolefin separator of 1 rad/s or less, in a frequency-loss/storage modulus curve, the horizontal axis of which is the frequency (rad/s) of the crosslinked polyolefin separator converted into a log scale and the vertical axis of which is storage modulus G' (A) and loss modulus G" (B) of the crosslinked polyolefin separator converted into a log scale.

**14.** The method for manufacturing a crosslinked polyolefin separator according to claim 13, wherein the Type 2 photoinitiator comprises thioxanthone (TX), a thioxanthone derivative, benzophenone (BPO), a benzophenone derivative, or a mixture of two or more of them.

**15.** The method for manufacturing a crosslinked polyolefin separator according to claim 13, wherein the concentration of the Type 2 photoinitiator in the Type 2 photoinitiator composition is 0.01-0.3 wt%.

FIG. 1

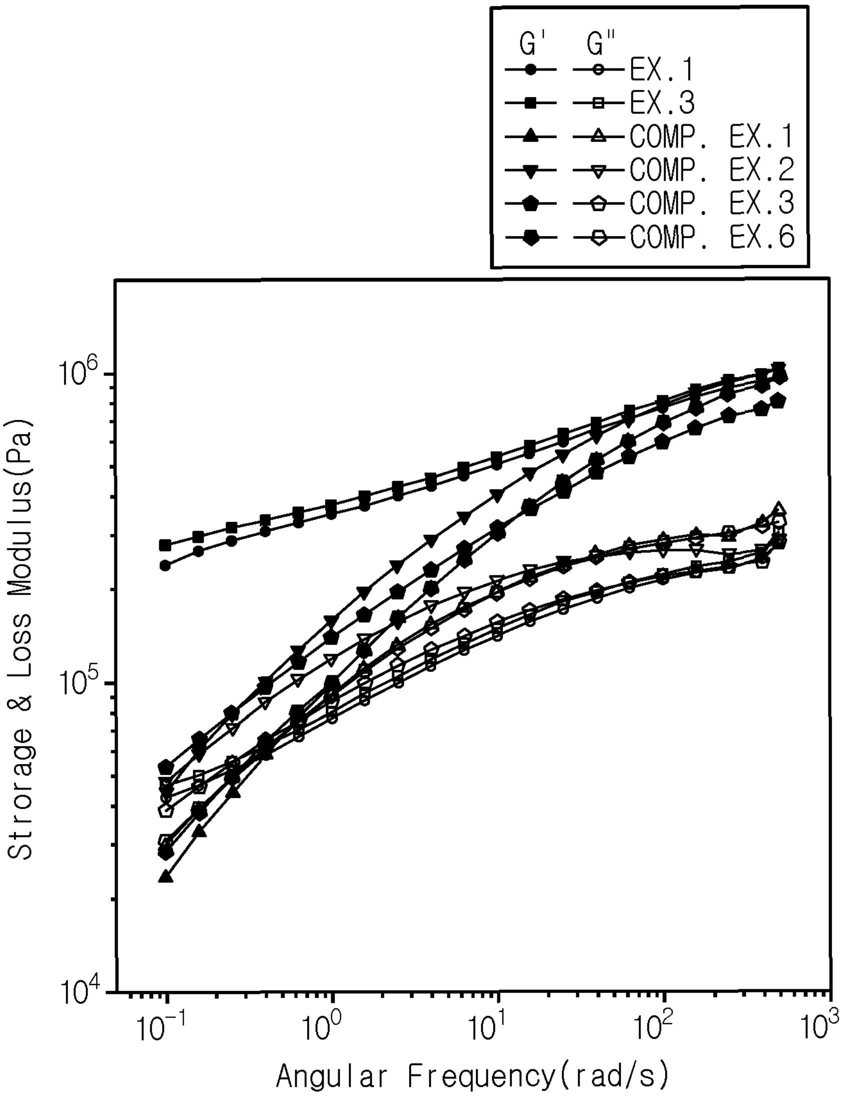
G' G"
EX.1
EX.3
COMP. EX.1
COMP. EX.2
COMP. EX.3
COMP. EX.6
$10^6$
$10^5$
$10^4$
Strorage & Loss Modulus(Pa)
$10^{-1}$
$10^0$
$10^1$
$10^2$
$10^3$
Angular Frequency(rad/s)

**INTERNATIONAL SEARCH REPORT**

International application No.
**PCT/KR2020/015550**

**A. CLASSIFICATION OF SUBJECT MATTER**

**H01M 50/409**(2021.01)i; **H01M 50/40**(2021.01)i; **H01M 10/052**(2010.01)i; **H01M 4/525**(2010.01)i; **B29C 48/00**(2019.01)i; **B29C 48/08**(2019.01)i; **C08J 9/28**(2006.01)i; **C08J 9/26**(2006.01)i

According to International Patent Classification (IPC) or to both national classification and IPC

**B. FIELDS SEARCHED**

Minimum documentation searched (classification system followed by classification symbols)

H01M 50/409(2021.01); B29C 48/00(2019.01); B29C 48/92(2019.01); C04B 35/64(2006.01); C08J 9/00(2006.01); H01M 10/052(2010.01); H01M 2/16(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 저장응력(storage modulus), 손실 응력(loss modulus), 폴리올레핀(polyolefin), 다공(porous), 분리막(separator), 가교(crosslink)

**C. DOCUMENTS CONSIDERED TO BE RELEVANT**

| Category* | Citation of document, with indication, where appropriate, of the relevant passages | Relevant to claim No. |
|---|---|---|
| X | KR 10-2016-0129580 A (LG CHEM, LTD.) 09 November 2016 (2016-11-09) See claims 1 and 9; and paragraphs [0004], [0136], [0137] and [0179]-[0186]. | 1,5-7,9,12 |
| Y | | 8 |
| A | | 2-4,10,11,13-15 |
| Y | WO 2013-065918 A1 (JH CHEMICAL INDUSTRY CO., LTD. et al.) 10 May 2013 (2013-05-10) See claim 1. | 8 |
| A | KR 10-2037343 B1 (LG CHEM, LTD.) 28 October 2019 (2019-10-28) See claim 1. | 1-15 |
| A | JP 09-216964 A (NITTO DENKO CORP.) 19 August 1997 (1997-08-19) See claim 1. | 1-15 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **23 February 2021** | **23 February 2021** |
| Name and mailing address of the ISA/KR<br>**Korean Intellectual Property Office**<br>**Government Complex-Daejeon Building 4, 189 Cheongsa-ro, Seo-gu, Daejeon 35208** | Authorized officer |
| Facsimile No. **+82-42-481-8578** | Telephone No. |

Form PCT/ISA/210 (second sheet) (July 2019)

**INTERNATIONAL SEARCH REPORT**

International application No.
**PCT/KR2020/015550**

**C. DOCUMENTS CONSIDERED TO BE RELEVANT**

| Category* | Citation of document, with indication, where appropriate, of the relevant passages | Relevant to claim No. |
|---|---|---|
| A | US 2009-0170005 A1 (KIMISHIMA, K. et al.) 02 July 2009 (2009-07-02)<br>See claim 1. | 1-15 |

Form PCT/ISA/210 (second sheet) (July 2019)

**INTERNATIONAL SEARCH REPORT**
**Information on patent family members**

International application No.
**PCT/KR2020/015550**

| Patent document cited in search report | Publication date (day/month/year) | Patent family member(s) | Publication date (day/month/year) |
|---|---|---|---|
| KR 10-2016-0129580 A | 09 November 2016 | KR 10-1915346 B1 | 05 November 2018 |
| WO 2013-065918 A1 | 10 May 2013 | KR 10-2013-0049517 A | 14 May 2013 |
| KR 10-2037343 B1 | 28 October 2019 | KR 10-2037343 B1 | 28 October 2019 |
| JP 09-216964 A | 19 August 1997 | JP 3735150 B2 | 18 January 2006 |
| US 2009-0170005 A1 | 02 July 2009 | CA 2627811 A1 | 10 May 2007 |
| | | CN 101300295 A | 05 November 2008 |
| | | EP 1947138 A1 | 23 July 2008 |
| | | EP 1947138 B1 | 26 October 2011 |
| | | JP 5250261 B2 | 31 July 2013 |
| | | KR 10-1389780 B1 | 29 April 2014 |
| | | KR 10-2008-0072650 A | 06 August 2008 |
| | | TW 200726800 A | 16 July 2007 |
| | | TW I405800 B | 21 August 2013 |
| | | WO 2007-052663 A1 | 10 May 2007 |

Form PCT/ISA/210 (patent family annex) (July 2019)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020190142908